# EUROPEAN PATENT SPECIFICATION

(11) **EP 1 987 967 B1**
(45) Date of publication and mention of the grant of the patent: **17.02.2010**
(21) Application number: 07425254.5
(22) Date of filing: 30.04.2007
(51) Int. Cl.: B60D 1/46

(54) **Sliding tow hook for farming machines**
Anhängerkupplung für Landwirtschaftsmaschinen
Crochet de dépannage coulissant pour machines agricoles

(43) Date of publication of application: 05.11.2008
(73) Proprietor: ARIES S.r.l., 06019 Umbertide (IT)
(72) Inventor: Minelli, Mauro, 06080 Colombella (IT)
(74) Representative: Bongiovanni, Simone

(56) References cited:
- EP-A1- 0 155 338
- EP-A1- 0 578 072
- EP-A1- 0 843 956
- AT-B- 400 322

## Description

The present invention relates to a sliding tow hook for farming machines.

Specifically, the present invention relates to a tow hook of the type comprising a guide extending in a first given direction; a slide movable along the guide in the first direction; and a pair of locking pins reciprocally aligned in a second direction transversal to the first direction and mobile in the second direction between a locking position of the slide along the guide and a releasing position.

Such a tow hook, with the features of the preamble of claim 1, is known for example from document EP-A-0 843 956.

The guide comprises, for each locking pin, a plurality of accommodation holes which are adapted to be engaged by the locking pin itself following a displacement of the locking pins to the locking position and are reciprocally aligned in the first direction to allow to selectively control the position of the slide along the guide.

The tow hook further comprises an actuating member mounted to rotate about a longitudinal axis of the locking pins and to displace the locking pins themselves from the locking position to the releasing position with a roto-translation motion about and along the mentioned longitudinal axis.

When the tow hook is maintained for a long time in a given position along the guide and/or is used in harsh environmental conditions, e.g. in the presence of ice and/or mud, the locking pins may get blocked in the corresponding accommodation holes. Consequently, in order to avoid the jamming of the locking pins in the corresponding accommodation holes, the operator must alternatively and repeatedly operate the actuating member about the mentioned longitudinal axis to displace the locking pins with respect to the corresponding accommodation holes.

However, as the operation of the actuating member implies the displacement of the locking pins in their releasing position, the tow hooks of the known type described above do not normally allow the operator to release the locking pins and the corresponding accommodation holes maintaining the locking pins in their locking position and thus avoiding unexpected and dangerous releasing of the slide from the guide.

It is an object of the present invention to provide a sliding tow hook for farming machines which is free from the above-described drawbacks and which is simple and cost-effective to implement.

According to the present invention, there is provided a sliding tow hook for farming machines as claimed in claim 1. Preferred embodiments are detailed in the dependent claims 2-9.

The present invention will now be described with reference to the accompanying drawings which illustrate a non-limitative example of embodiment thereof, in which:
figure 1 is a diagrammatic plan view, with parts removed and parts in section for clarity, of a preferred embodiment of the tow hook of the present invention shown in a first operative position;
figure 2 is a diagrammatic perspective view, with parts removed for clarity, of the tow hook in figure 1 shown in the first operative position;
figures 3 and 5 are similar to figure 1 and show the tow hook in a second and third operative position, respectively; and
figures 4 and 6 are similar to figure 2 and show the tow hook in the second and third operative position, respectively.

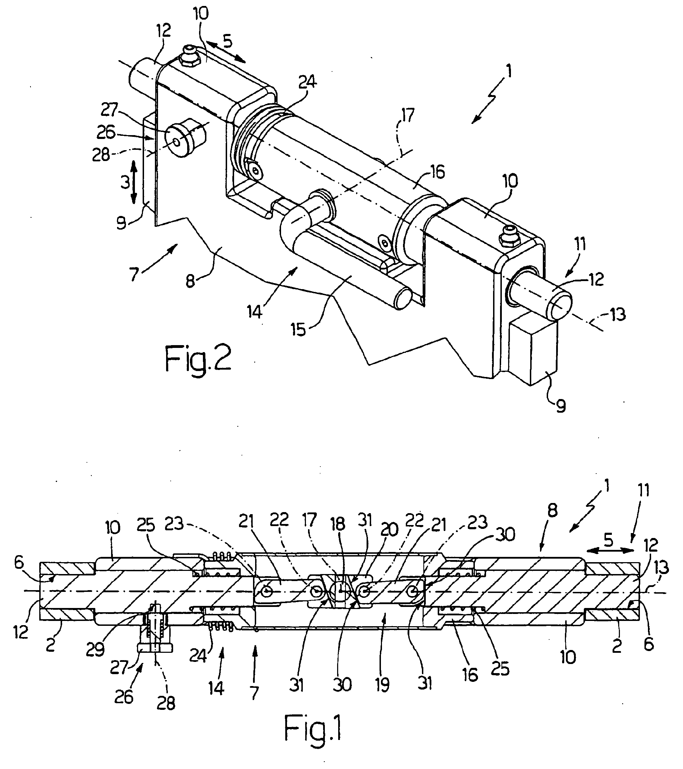

With reference to figure 1, numeral 1 indicates as a whole a sliding tow hook for farming machines (known and not shown).

Tow hook 1 comprises a pair of reciprocally parallel guides 2, which extend in a given direction 3, are substantially U-shaped, are fixed to a frame (not shown) of a farming machine (not shown) with their concavities facing each other, and are laterally limited by corresponding flat walls 4 substantially parallel to each other and orthogonal to a direction 5 transversal to direction 3.

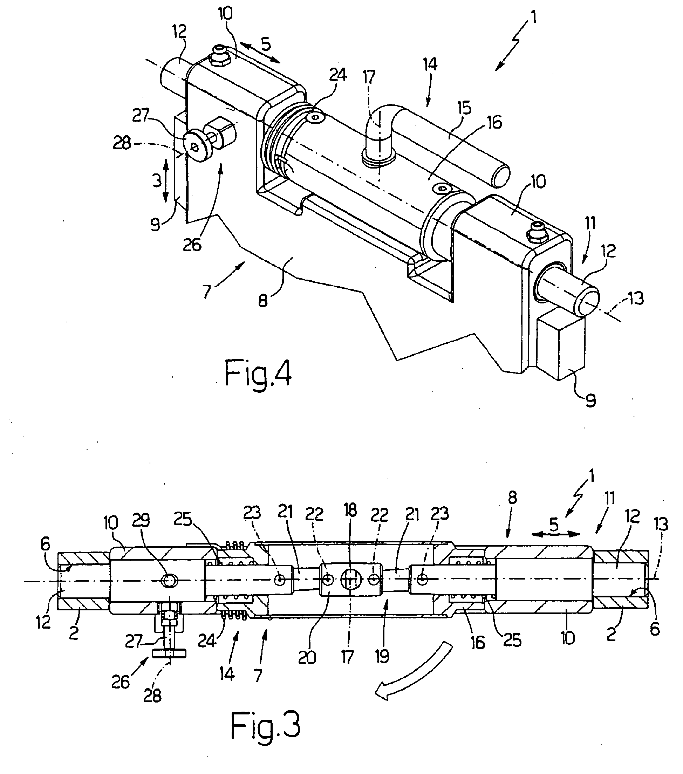

Each guide 2 is provided with a plurality of holes 6 (only one of which is shown in figures 1 and 3), which are obtained through corresponding wall 4 in direction 5, are reciprocally aligned in direction 3, and are each aligned with a corresponding hole 6 of the other guide 2 in direction 5 itself.

Guides 2 slidingly accommodate a slide 7 comprising a substantially flat plate 8, which extends parallelly to directions 3 and 5, is provided with two side runners 9 protruding from plate 8 in direction 5 and engaged in guides 2, and presents two supporting brackets 10 reciprocally parallel and protruding upwards from plate 8 in direction 3.

The position of slide 7 along guides 2 is selectively controlled by means of a fastening device 11 comprising two reciprocally coaxial locking pins 12, which present a longitudinal axis 13 parallel to direction 5, and which each extend through a corresponding bracket 10 in direction 5 itself.

Each pin 12 is rotationally coupled to corresponding bracket 10 to rotate with respect to corresponding bracket 10 about axis 13, and is further coupled in axially sliding manner to corresponding bracket 10 to perform rectilinear displacements along axis 13 in direction 5 with respect to corresponding bracket 10.

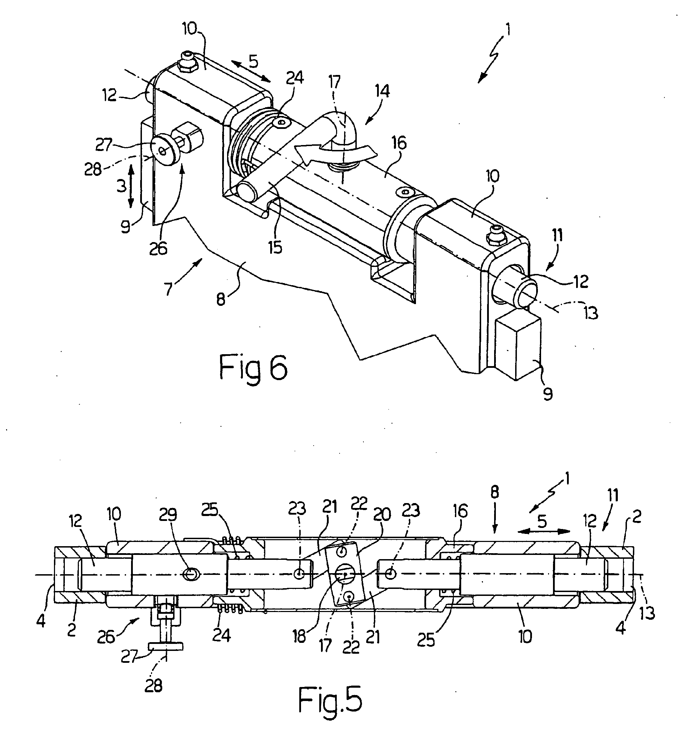

Pins 12 are displaced between an extracted locking position (figures 1-4), in which pins 12 engage corresponding holes 6 in corresponding guides 2, and a retracted releasing position (figures 5 and 6) by means of an actuating device 14 comprising an actuating member defined by a handle 15, which is substantially L-shaped, and which extends through a containment socket 16, which is mounted between brackets 10 coaxially to axis 13, and is slidingly coupled to brackets 10 to rotate, with respect to brackets 10 and under the bias of handle 15, about axis 13.

Handle 15 is fixedly coupled to socket 16 to rotate, jointly with socket 16, about axis 13, and is further slidingly coupled to socket 16 to rotate with respect to socket 16, about a hinging axis 17 orthogonal to axis 13, whose orientation depends on the position of handle 15 about axis 13 itself.

Handle 15 presents a free end 18, which is accommodated in socket 16, and is coupled to the pins 12 by means of a coupling device 19 comprising a rocker arm 20 fixed to end 18 and, for each pin 12, a corresponding crank 21 extending between two axes 22, 23 parallel to each other and to axis 17, and in which axis 22 is the rotation axis of crank 21 with respect to rocker arm 20 and axis 23 is the rotation axis of crank 21 with respect to pin 12 itself.

Device 14 further comprises a torsion spring 24, which is fitted on socket 16 coaxially to axis 13, and is interposed between slide 7 and socket 16 to displace and normally maintain socket 16 in a rest position (figure 2), in which socket 16 itself extends on a substantially horizontal containment plane.

Device 14 finally comprises a corresponding compression spring 25 for each pin 12, which spring is fitted on pin 12 coaxially to axis 13 and is interposed between socket 16 and pin 12 to displace and normally maintain pin 12 itself in its extracted locking position.

Tow hook 1 further comprises a safety device comprising, in turn, a fastening pin 27, which presents a longitudinal axis 28 transversal to axis 13, extends through a bracket 10, and is coupled in axially sliding manner to bracket 10 to perform, with respect to bracket 10 itself, rectilinear displacements between an advanced locking position (figures 1 and 2), in which pin 27 engages a seat 29 obtained on the corresponding pin 12 so as to prevent the rotation of pins 12, and thus of handle 15 about axis 13, and a retracted releasing position (figures 3-6), in which pin 27 disengages seat 29 to allow the rotation of pins 12, and thus of handle 15 about axis 13.

The operation of tow hook 1 will now be described with reference to figures 1-6 and from an instant in which fastening pin 27 is arranged in its advanced locking position, handle 15 is arranged in its rest position, and locking pins 12 are arranged in their extracted locking position (figures 1 and 2).

With reference to figures 3 and 4, pin 27 is displaced to its retracted releasing position and handle 15 is rotated upwards about axis 13, against the bias of torsion spring 24, by an angle substantially equal to 90° and from its rest position to a first operative position, in which handle 15 extends on a substantially vertical containment plane containing axis 13 itself.

Regarding the above it must be noted that during the displacement of handle 15 about axis 13 from its rest position to its first operative position:
locking pins 12 are displaced with respect to the corresponding holes 6 in guides 2 only by a rotational motion about axis 13; and

the clockwise rotation of cranks 21 about corresponding axes 23, and thus the rotation of handle 15 upwards about hinging axis 17, are prevented by engaging two shaped side faces 30 of each crank 21 with corresponding flat stopper faces 31 of rocker arm 20 and by corresponding pin 12 (figure 1).

Consequently, the rotational movement of handle 15, and thus of pins 12 about axis 13, may be alternatively repeated clockwise and anti-clockwise in order to avoid the jamming of pins 12 in corresponding pins 6 and without causing the displacement of pins 12 themselves in direction 5 and in their retracted releasing position.

Subsequently, handle 15 is displaced about hinging axis 17 from its first operative position (figures 3 and 4) to a second operative position (figures 5 ad 6), in which handle 15 extends on a substantially vertical containing plane orthogonal to axis 13. Following the rotation of handle 15 about axis 17, pins 12 are displaced by rocker arm 20 and cranks 21 in direction 5 against the bias of compression springs 25 from their extracted locking position to their retracted releasing position so as to allow the sliding of slide 7 along guides 2.

The release of handle 15 firstly implies the automatic return of the pins 12 to their extracted locking position and of handle 15 to its first operative position under the bias of compression springs 25 (figures 3 and 4) and, thus, the automatic return of handle 15 to its rest position under the bias of torsion spring 24 (figures 1 and 2).

## Claims

1. A sliding tow hook for a farming machine, the tow hook comprising a guide (2) extending in a first given direction (3); a slide (7) mobile along the guide (2) in the first direction (3); a pair of locking pins (12), which are reciprocally aligned in a second direction (5) transversal to the first direction (3), present a first longitudinal axis (13) parallel to the second direction (5), and are coupled to the slide (7) to rotate about the first axis (13) and translate in the second direction (5); and an actuating member (15) for displacing the locking pins (12) from a locking position of the slide (7) along the guide (2) to a releasing position, the actuating member (15) being rotationally mounted about the first axis (13); and being **characterised in that** the actuating member (15) is mounted to further rotate about a second axis (17) orthogonal to the first axis (13); the locking pins (12) being mobile about the first axis (13) following a rotation of the actuating member (15) about the first axis (13) and in the second direction (5) following a rotation of the actuating member (15) about the second axis (17).

2. A tow hook according to claim 1 and further comprising a coupling device (19) arranged between the locking pins (12) and the actuating member (15) to displace the locking pins (12) in the second direction (5) between the locking position and the releasing position only following the rotation of the actuating member (15) about the second axis (17).

3. A towing hook according to claim 2, wherein the coupling device (19) comprises a rocker arm (20) mounted to rotate about said first and second axes (13, 17) and a pair of cranks (21), each of which is interposed between a corresponding locking pin (12) and the rocker arm (20).

4. A tow hook according to any of the preceding claims, wherein the actuating member (15) is mobile about the first axis (13) between a rest position and a first operative position and about the second axis (17) between the first operative position and a second operative position.

5. A tow hook according to claim 4 and further comprising a first actuating device (25) for displacing and normally maintaining the actuating member (15) in the first operating position and the locking pins (12) in the locking position.

6. A tow hook according to claim 5 and further comprising a second actuating device (24) to displace and normally maintain the actuating member (15) in the rest position.

7. A tow hook according to claim 6, wherein said first and second actuating devices (25, 24) comprise corresponding elastic actuating means.

8. A tow hook according to one of the claims from 4 to 7 and further comprising stopper means (31) for allowing the actuating member (15) to rotate about the second axis (17) from the first operative position to the second operative position in only one sense of rotation.

9. A tow hook according to the preceding claims and further comprising a safety device (26) for preventing the displacement of the locking pins (12) and the actuating member (15) about the first axis (13).

## Patentansprüche

1. Gleitender Abschlepphaken für eine landwirtschaftliche Maschine, wobei der Abschlepphaken umfasst: eine Führung (2), welche sich in einer ersten vorgegebenen Richtung (3) erstreckt; ein entlang der Führung (2) in die erste Richtung (3) bewegliches Gleitstück (7); ein Paar Sperrstifte (12), welche entgegengesetzt in einer zweiten Richtung (5) transversal zu der ersten Richtung (3) ausgerichtet sind, eine erste parallel zu der zweiten Richtung (5) verlaufende Längsachse (13) aufweisen und mit dem Gleitstück (7) zur Rotation um die erste Achse (13) und zur Übertragung in die zweite Richtung (5) verbunden sind; und ein Betätigungselement (15) zur Verstellung der Sperrstifte (12) von einer Sperrstellung des Gleitstücks (7) entlang der Führung (2) in eine Auslösestellung, wobei das Betätigungselement (15) drehbar um die erste Achse (13) angebracht ist; und der Abschlepphaken **dadurch gekennzeichnet ist, dass** das Betätigungselement (15) so angebracht ist, dass es um eine zweite Achse (17), die orthogonal zur ersten Achse (13) ist, rotieren kann; die Sperrstifte (12) um die erste Achse (13), der Rotation des Betätigungselements (15) um die erste Achse (13) folgend, und in die zweite Richtung (5), der Rotation des Betätigungselements (15) um die zweite Achse (17) folgend, beweglich sind.

2. Abschlepphaken gemäß Anspruch 1, der zusätzlich eine Kupplungseinrichtung (19) aufweist, welche zwischen den Sperrstiften (12) und dem Betätigungselement (15) zur Verstellung der Sperrstifte (12) in die zweite Richtung (5) zwischen der Sperr- und der Auslösestellung nur der Rotation des Betätigungselements (15) um die zweite Achse (17) folgend angebracht ist.

3. Abschlepphaken gemäß Anspruch 2, wobei die Kupplungseinrichtung (19) einen Kipphebel (20), welcher zur Rotation um die erste und zweite Achse (13, 17) angebracht ist, und ein Paar Kurbeln (21), wobei jede der Kurbeln zwischen einem entsprechenden Sperrstift (12) und dem Kipphebel (20) eingefügt ist, aufweist.

4. Abschlepphaken gemäß einem der voranstehenden Ansprüche, wobei das Betätigungselement (15) um die erste Achse (13) zwischen einer Ruhestellung und einer ersten Arbeitsstellung und um die zweite Achse (17) zwischen der ersten Arbeitsstellung und einer zweiten Arbeitsstellung beweglich ist.

5. Abschlepphaken gemäß Anspruch 4, der zusätzlich eine erste Betätigungsvorrichtung (25) aufweist, die das Betätigungselement (15) in die erste Arbeitsstellung und die Sperrstifte (12) in die Sperrstellung verstellt und normalerweise hält.

6. Abschlepphaken gemäß Anspruch 5, der zusätzlich eine zweite Betätigungsvorrichtung (24) aufweist, die das Betätigungselement (15) in die Ruhestellung verstellt und normalerweise hält.

7. Abschlepphaken gemäß Anspruch 6, wobei die erste und zweite Betätigungsvorrichtung (25, 24) entsprechende elastische Betätigungsmittel aufweisen.

8. Abschlepphaken gemäß einem der Ansprüche 4 bis 7, der zusätzlich ein Blockierelement (31) aufweist, welches die Rotation des Betätigungselements (15) um die zweite Achse (17) von der ersten Arbeitsstellung in die zweite Arbeitsstellung nur in eine Drehrichtung erlaubt.

9. Abschlepphaken gemäß den voranstehenden Ansprüchen, der eine Sicherheitsvorrichtung (26) zur Vermeidung der Verstellung der Sperrstifte (12) und des Betätigungselements (15) um die erste Achse (13) aufweist.

## Revendications

1. Crochet de remorquage coulissant pour une machine agricole, le crochet de remorquage comprenant un guidage (2) s'étendant dans une première direction donnée (3) ; un coulisseau (7) mobile le long du guidage (2) dans la première direction (3) ; une paire de goupilles de verrouillage (12), qui sont alignées réciproquement dans une seconde direction (5) transversale à la première direction (3), présentent un premier axe longitudinal (13) parallèle à la seconde direction (5), et sont accouplées avec le coulisseau (7) pour tourner autour du premier axe (13) et se translater dans la seconde direction (5) ; et un élément d'actionnement (15) pour déplacer les goupilles de verrouillage (12) d'une position de verrouillage du coulisseau (7) le long du guidage (2) à une position de déverrouillage, l'élément d'actionnement (15) étant monté en rotation autour du premier axe (13) ; et **caractérisé en ce que** l'élément d'actionnement (15) est monté pour tourner autour d'un second axe (17) orthogonal au premier axe (13) ; les goupilles de verrouillage (12) étant mobiles autour du premier axe (13) suivant une rotation de l'élément d'actionnement (15) autour du premier axe (13) et dans la seconde direction (5) suivant une rotation de l'élément d'actionnement (15) autour du second axe (17).

2. Crochet de remorquage selon la revendication 1, comprenant en outre un dispositif d'accouplement (19) agencé entre les goupilles de verrouillage (12) et l'élément d'actionnement (15) pour déplacer les goupilles de verrouillage (12) dans la seconde direction (5) entre la position de verrouillage et la position de déverrouillage seulement suivant la rotation de l'élément d'actionnement (15) autour du second axe (17).

3. Crochet de remorquage selon la revendication 2, dans lequel le dispositif d'accouplement (19) comprend un bras culbuteur (20) monté pour tourner autour desdits premier et second axes (13, 17) et une paire de manivelles (21), dont chacune est interposée entre une goupille de verrouillage correspondante (12) et le bras culbuteur (20).

4. Crochet de remorquage selon une quelconque des revendications précédentes, dans lequel l'élément d'actionnement (15) est mobile autour du premier axe (13) entre une position de repos et une première position de fonctionnement et autour du second axe (17) entre la première position de fonctionnement et une seconde position de fonctionnement.

5. Crochet de remorquage selon la revendication 4, comprenant en outre un premier dispositif d'actionnement (25) pour déplacer et normalement maintenir l'élément d'actionnement (15) dans la première position de fonctionnement et les goupilles de verrouillage (12) dans la position de verrouillage.

6. Crochet de remorquage selon la revendication 5 et comprenant en outre un second dispositif d'actionnement (24) pour déplacer et normalement maintenir l'élément d'actionnement (15) dans la position de repos.

7. Crochet de remorquage selon la revendication 6, dans lequel lesdits premier et second dispositifs d'actionnement (25, 24) comprennent des moyens d'actionnement élastiques correspondants.

8. Crochet de remorquage selon une des revendications 4 à 7, comprenant en outre des moyens de butée (31) pour permettre à l'élément d'actionnement (15) de tourner autour du second axe (17) de la première position de fonctionnement à la seconde position de fonctionnement dans seulement un sens de rotation.

9. Crochet de remorquage selon les revendications précédentes, comprenant en outre un dispositif de sécurité (26) pour empêcher le déplacement des goupilles de verrouillage (12) et de l'élément d'actionnement (15) autour du premier axe (13).
